# EUROPEAN PATENT APPLICATION

(11) **EP 4 823 101 A1**
(43) Date of publication of application: **14.10.2026**
(21) Application number: 25772323.9
(22) Date of filing: 13.02.2025
(51) Int. Cl.: H04N 21/439, H04N 21/43, H04N 21/422, H04N 21/81, H04S 7/00, H04R 5/02

(54) **CONTENT PROCESSING APPARATUS AND METHOD FOR PROCESSING SOUND CONTENT**

(30) Priority: 13.03.2024 KR 20240035086
(71) Applicant: Samsung Electronics Co., Ltd., Suwon-si, Gyeonggi-do 16677 (KR)
(72) Inventor: HWANG, Sungjun, Suwon-si, Gyeonggi-do 16677 (KR); KIM, Euijun, Suwon-si, Gyeonggi-do 16677 (KR); MA, Jiyeon, Suwon-si, Gyeonggi-do 16677 (KR); JUNG, Jingun, Suwon-si, Gyeonggi-do 16677 (KR); LEE, Youngah, Suwon-si, Gyeonggi-do 16677 (KR)
(74) Representative: Appleyard Lees IP LLP
(86) International application number: PCT/KR2025/002086
(87) International publication number: WO 2025/192884

(57) **Abstract**

A content processing apparatus is disclosed. The apparatus identifies at least one external device to participate in playing sound content, from among external devices located in the same space, reconstructs the sound content into sound content to which an echo is added on the basis of echo characteristic information about a place corresponding to the sound content and the location of the identified at least one external device, and outputs the reconstructed sound content in synchronization with the at least one external device. Accordingly, a user can realistically listen to the sound content.

## Description

### [Technical Field]

The disclosure relates to technology involving a content processing apparatus that processes by taking into consideration characteristics of sound content and a method thereof.

### [Background Art]

Sound devices for playing back sound content are being developed toward a direction in which a user is able to listen to a livelier sound source.

However, in prior art, listeners were able to listen to only sound sources that were included at production of sound content. Accordingly, even if a sound content containing scenes of performing in a major stadium or a concert hall is viewed in a home, because a listener is not able to experience various reflection sounds and the like unlike in an actual performance location, there is a disadvantage of not being able to experience the sense of realism.

Accordingly, there is a growing need for technology that is capable of providing a sound source with a greater sense of realism to the listeners.

### [Disclosure]

### [Technical Solution]

According to at least one embodiment of the disclosure, an electronic apparatus includes a communication part, at least one processor, a speaker, and memory.

The processor is configured to obtain reflection sound characteristic information for a location corresponding to sound content from the memory, identify at least one external apparatus to participate in playing back the sound content among external apparatuses positioned in a same space as the content processing apparatus, reconstruct, based on a position of the identified at least one external apparatus and the reflection sound characteristic information, the sound content to sound content with added reflection sounds, transmit at least a portion of the reconstructed sound content to the searched at least one external apparatus through the communication part, and control the speaker to output the reconstructed sound content by synchronizing with the searched at least one external apparatus.

### [Description of Drawings]

FIG. 1 is a diagram illustrating an operation of a content processing apparatus according to at least one embodiment of the disclosure;
FIG. 2 is a block diagram illustrating a configuration of a content processing apparatus according to at least one embodiment of the disclosure;
FIG. 3 is a diagram illustrating an example of a method for identifying a location corresponding to a sound content;
FIG. 4 is a diagram illustrating an example of a method for determining a useable external apparatus through a server apparatus;
FIG. 5 to FIG. 6 are diagrams illustrating various methods for identifying a location of at least one external apparatus in a content processing apparatus according to various embodiments of the disclosure;
FIG. 7 is a diagram illustrating a method for outputting by reconstructing sound content in a content processing apparatus according to at least one embodiment of the disclosure;
FIG. 8 is a diagram illustrating an example of a method for synchronizing output times of a content processing apparatus and an external apparatus;
FIG. 9 is a diagram illustrating an example of a method for synchronizing volumes of a content processing apparatus and an external apparatus;
FIG. 10 is a diagram illustrating still another method for synchronizing output times and volumes of a content processing apparatus and an external apparatus;
FIG. 11 is a flowchart illustrating a sound content processing method of an electronic apparatus according to at least one embodiment of the disclosure; and
FIG. 12 is a block diagram illustrating a configuration of a user mobile terminal apparatus according to at least one embodiment of the disclosure.

### [Mode for Invention]

Various modifications may be made to the embodiments of the disclosure, and there may be various types of embodiments. Accordingly, specific embodiments will be illustrated in drawings, and the embodiments will be described in detail in the detailed description. However, it should be noted that the various embodiments are not for limiting the scope of the disclosure to a specific embodiment, but they should be interpreted to include all modifications, equivalents or alternatives of the embodiments included in the ideas and the technical scopes disclosed herein. With respect to the description of the drawings, like reference numerals may be used to indicate like elements.

In describing the disclosure, in case it is determined that the detailed description of related known technologies may unnecessarily confuse the gist of the disclosure, the detailed description thereof will be omitted.

Further, the embodiments below may be modified to various different forms, and it is to be understood that the scope of the technical spirit of the disclosure is not limited to the embodiments below. Rather, the embodiments are provided so that the disclosure will be thorough and complete, and to fully convey the technical spirit of the disclosure to those skilled in the art.

Terms used in the disclosure have been merely used to describe a specific embodiment, and is not intended to limit the scope of protection. A singular expression includes a plural expression, unless otherwise specified.

In the disclosure, expressions such as "have", "may have", "include", and "may include" are used to designate a presence of a corresponding characteristic (e.g., elements such as numerical value, function, operation, or component), and not to preclude a presence or a possibility of additional characteristics.

In the disclosure, expressions such as "A or B", "at least one of A and/or B", or "one or more of A and/or B" may include all possible combinations of the items listed together. For example, "A or B", "at least one of A and B", or "at least one of A or B" may refer to all cases including (1) at least one A, (2) at least one B, or (3) both of at least one A and at least one B.

Expressions such as "1st", "2nd", "first", or "second" used in the disclosure may limit various elements regardless of order and/or importance, and may be used merely to distinguish one element from another element and not limit the relevant element.

When a certain element (e.g., first element) is indicated as being "(operatively or communicatively) coupled with/to" or "connected to" another element (e.g., second element), it may be understood as the certain element being directly coupled with/to the another element or as being coupled through other element (e.g., third element).

Conversely, when the certain element (e.g., first element) is indicated as "directly coupled with/to" or "directly connected to" another element (e.g., second element), it may be understood as the other element (e.g., third element) not being present between the certain element and the another element.

The expression "configured to... (or set up to)" used in the disclosure may be used interchangeably with, for example, "suitable for...", "having the capacity to...", "designed to...", "adapted to...", "made to...", or "capable of..." based on circumstance. The term "configured to... (or set up to)" may not necessarily mean "specifically designed to" in terms of hardware.

Rather, in a certain circumstance, the expression "a device configured to..." may mean something that the device "may perform..." together with another device or components. For example, a phrase "a processor configured to (or set up to) perform A, B, or C" may mean a dedicated processor (e.g., an embedded processor) for performing a relevant operation, or a generic-purpose processor (e.g., a central processing unit (CPU) or an application processor) capable of performing the relevant operations by executing one or more software programs stored in a memory apparatus.

The term 'module' or 'part' in the embodiments herein perform at least one function or operation, and may be implemented with hardware or software, or implemented with a combination of hardware and software. In addition, a plurality of 'modules' or a plurality of 'parts', except for a 'module' or a 'part' which needs to be implemented with a specific hardware, may be integrated in at least one module and implemented as at least one processor.

Meanwhile, various elements and areas in the drawings have been schematically illustrated. Accordingly, the technical spirit of the disclosure is not limited by relative sizes and distances illustrated in the accompanied drawings.

Embodiments of the disclosure will be described in detail with reference to the accompanying drawings below to aid in the understanding of those of ordinary skill in the art.

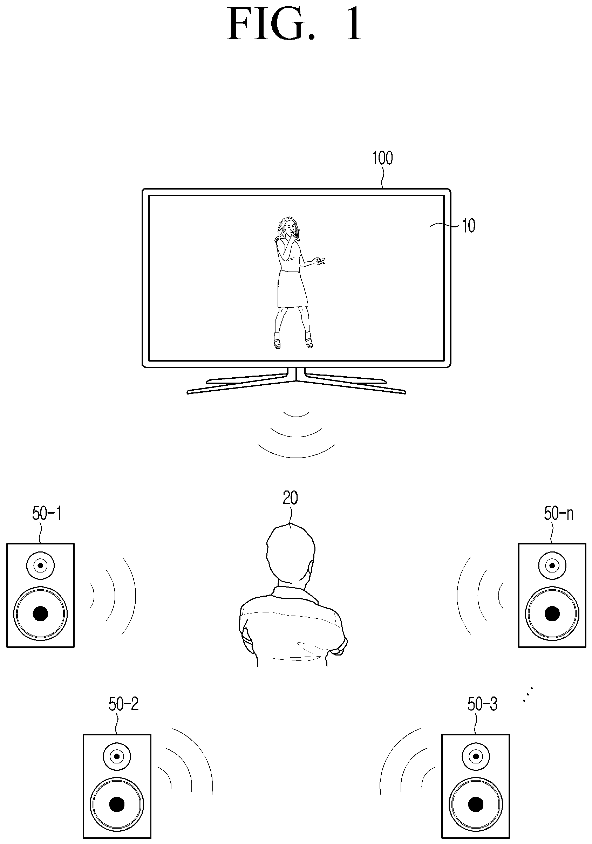

FIG. 1 is a diagram illustrating an operation of a content processing apparatus 100 according to at least one embodiment of the disclosure.

FIG. 1 indicates a situation in which the content processing apparatus 100, various external apparatuses 50-1 to 50-n, a user 20, and the like are present together in one space. In an example, the user 20 may use the content processing apparatus 100 in various spaces such as a normal home, office, or the like.

The external apparatuses 50-1 to 50-n in the disclosure may be apparatuses with a speaker function. Each of the external apparatuses 50-1 to 50-n may be described as an electronic apparatus, a sound output apparatus, a speaker apparatus, and the like, but for convenience of description below, the above will be described as the external apparatus. The external apparatuses 50-1 to 50-n may be various electronic apparatuses such as, for example, and without limitation, a wireless speaker, a TV, a mobile projector, a robot cleaner, an autonomous driving robot, a PC, a lap top PC, a mobile phone, a tablet PC, a washer, a refrigerator, an air conditioner, a dryer, an air dresser, and the like.

In FIG. 1, a plurality (n-number) of external apparatuses 50-1 to 50-n being used has been shown, but various embodiments of the disclosure may be implemented even when one external apparatus is used in addition to the content processing apparatus 100. Meanwhile, in FIG. 1, although the user 20 has been shown singularly, the user 20 may carry a user terminal apparatus such as a mobile phone. The user terminal apparatus described may also be used as one of the above-described external apparatus, but for convenience of description, an apparatus carried by the user 20 may be described as a user terminal apparatus. The user 20 may mean a person that listens to sound sources.

The content processing apparatus 100 may be an apparatus for processing sound content. For example, the content processing apparatus 100 may be a TV or monitor, a lap top PC, a kiosk, a sound bar and the like, but is not limited thereto, and may be implemented as various apparatuses that include a speaker such as a mobile phone or a tablet PC. The content processing apparatus 100 may be otherwise referred to as a content output apparatus, or referred to variously such as, for example, and without limitation, a media playback apparatus, a sound output apparatus, a content output apparatus, a speaker apparatus, an electronic apparatus, and the like, but will be described collectively as a content processing apparatus in the disclosure.

Sound content may be content that includes audio signals. For example, it may be content streamed from other external sources such as, for example, and without limitation, an internet server, a broadcasting station, or the like, or stored content that is stored in the content processing apparatus 100 or a storage media connected thereto, content that is provided by being played back from various multimedia players connected to the content processing apparatus 100, or the like. The sound content described may be multimedia content that includes not only audio, but also video frames.

FIG. 1 shows a state in which the content processing apparatus 100 outputs one sound content while displaying a screen 10 together therewith. However, the content processing apparatus 100 does not necessarily have to display the screen 100 together therewith, and if it is a simple audio file, or if the content processing apparatus 100 does not include a display, only the audio may be played back.

The content processing apparatus 100 may output the same sound content by operating in connection with the plurality of external apparatuses 50-1 to 50-n that are in the same space. To this end, the content processing apparatus 100 may transmit at least a portion of the sound content or various signals and the like to the plurality of external apparatuses 50-1 to 50-n. In the disclosure, the content processing apparatus 100 transmitting data or signals to the external apparatus, or receiving therefrom, may be interpreted as including both of when transmitting and receiving directly and when transmitting and receiving indirectly through a server unless otherwise specified.

Referring to FIG. 1, the content processing apparatus 100 may use, based on sound content to be played back being determined, reflection sound characteristic information having a location corresponding to the sound content and perform an operation that includes reflection sounds in the sound content. The operation described may be described as an operation for reconstructing the sound content in the disclosure, but may be described in various terms such as, for example, and without limitation, a reverberation operation, a conversion operation, an update operation, and the like in addition thereto.

FIG. 1 indicates an example of a sound content including a video frame of a singer singing in a concert hall. In this case, a location corresponding to the sound content may be the concert hall. If a singer sings in the concert hall, various reflection sounds including early reflections, reverberations, and the like may be generated in addition to direct sounds output from a speaker connected through a mouth of a singer or a microphone. For normal speeches, early reflections may continue to be about 50 ms, and for music, it may continue up to 80 to 100 ms. If the reflection sound is also provided together therewith, the user 20 may experience a significantly greater sense of space or dimensionality than when outputting sound content singularly from the content processing apparatus 100.

After the content processing apparatus 100 performs a reconstruction operation for adding the reflection sounds described above, at least one external apparatus to participate in playing back the reconstructed sound content may be searched. The content processing apparatus 100 may output the reconstructed sound content together with the searched external apparatus.

As in the above-described example, assuming that it is a sound content of a singer singing a song in a concert hall, the user may experience a similar sense of space as if listening in the concert hall despite viewing the sound content from his or her home.

Various embodiments describing processing methods of the content processing apparatus 100 that reconstructs sound content and outputs the same together with at least one external apparatus will be described in detail below.

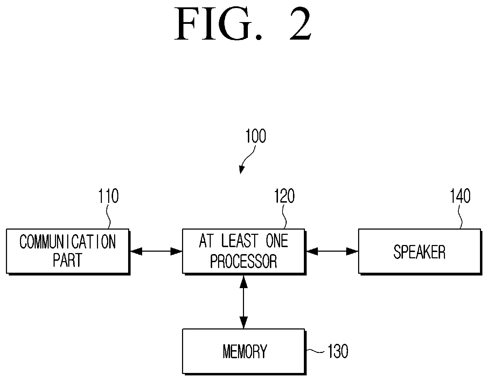

FIG. 2 is a block diagram illustrating a configuration of the content processing apparatus 100 according to at least one embodiment of the disclosure.

Referring to FIG. 2, the content processing apparatus 100 may include a communication part 110, at least one processor 120, memory 130, and a speaker 140. However, the above is not limited thereto, and the content processing apparatus 100 may be implemented in a form in which a portion of the configurations are excluded, or implemented in a form in which other configurations are further included.

The communication part 110 may be a configuration for performing communication with various external apparatuses. The communication part 110 may include at least one wireless communication module, at least one wired communication module, and the like. Each communication module may be implemented as at least one hardware chip form. For example, the wireless communication module may include at least one module among a Wi-Fi module, a Bluetooth module, an infrared communication module, or other communication modules. In addition thereto, the communication part 110 may include at least one communication chip performing communication according to various wireless communication standards such as, for example, and without limitation, ZigBee, 3rd Generation (3G), 3rd Generation Partnership Project (3GPP), Long Term Evolution (LTE), LTE Advanced (LTE-A), 4th Generation (4G), 5th Generation (5G), and the like. The wired communication module may include at least one of, for example, a local area network (LAN) module, an Ethernet module, a pair cable, a coaxial cable, an optical fiber cable, or an ultra wide-band (UWB) module.

The communication part 110 may receive sound content to process in the content processing apparatus 100 from an external source, and transmit a portion of data and signals from the content processing apparatus 100 to an external apparatus to operate in connection therewith.

The processor 120 may be a configuration for controlling an operation of the content processing apparatus 100. The processor 120 may be implemented as a digital signal processor (DSP) that processes digital signals, and a microprocessor. However, the embodiment is not limited thereto, and may include one or more of a central processing unit (CPU), a micro controller unit (MCU), a micro processing unit (MPU), a controller, an application processor (AP), a communication processor (CP), an ARM processor, or an artificial intelligence (AI) processor, or may be defined by the corresponding term. In addition, the processor 120 may be implemented as a System on Chip (SoC) or a large scale integration (LSI) embedded with a processing algorithm, and may be implemented in a form of a field programmable gate array (FPGA).

The memory 130 may be a configuration for storing various programs, data, and the like necessary in an operation of the content processing apparatus 100. The memory 130 may store sound content that is to be played back, or store reflection sound characteristic information that is different for each of a plurality of locations.

The memory 130 may be implemented in various forms such as a volatile memory (e.g., dynamic RAM (DRAM), static RAM (SRAM), or synchronous dynamic RAM (SDRAM), etc.) or a non-volatile memory (e.g., one time programmable ROM (OTPROM), programmable ROM (PROM), erasable and programmable ROM (EPROM), electrically erasable and programmable ROM (EEPROM), mask ROM, flash ROM, flash memory (e.g., NAND flash or NOR flash, etc.) hard drive, or solid state drive (SSD)).

The speaker 140 may be a configuration for outputting various sounds according to control by the processor 120. In FIG. 2, the content processing apparatus 100 has been shown as including the speaker 140 itself, but is not necessarily limited thereto, and an external speaker connected through an input and output port or a wireless communication interface of the content processing apparatus 100 may be used.

In addition, each configuration in FIG. 2 has been shown one by one, but at least one of the communication part 110, the processor 120, the memory 130, and the speaker 140 may be implemented in plurality according to the type or design specification of the content processing apparatus 100. In addition, some of the memory may be in a form embedded in the processor.

The processor 120 may perform, based on various programs and data stored in the memory 130, various functions such as reconstructing sound content and outputting the reconstructed sound content together with an external apparatus, and the like.

The processor 120 may receive input of various user operations through a button or other operation panel provided in the content processing apparatus 100, or a remote controller or a user terminal apparatus (e.g., mobile phone) for controlling the content processing apparatus 100. For example, the user may input, after installing a remote controller application on his or her mobile phone, a user operation in a method of selecting various remote controller buttons on an execution screen of the application. Alternatively, in addition to the remote controller application, the user may execute a separate application for accessing the server from his or her mobile phone, and input various user operations through a control screen provided from the server. For example, the user may input a user operation for playing back a sound content by selecting one of the sound content provided in a web server application.

The processor 120 may identify, based on the user operation described being input, the sound content to be played back. If it is a sound content that is provided via a streaming method, the processor 120 may access, through the communication part 110, an external source that provides the sound content, and receive the sound content. The processor 120 may store the received sound content in the memory 130. If the sound content stored in the memory 130 is selected, the processor 120 may identify a storage position of the selected sound content.

The processor 120 may identify a location corresponding to the sound content if the sound content to be played back is specified. The location identification may be carried out through various methods.

According to an example, the processor 120 may automatically identify a location corresponding to the sound content based on information associated with the sound content. The information associated with the sound content may include various information such as title information of the sound content, metadata included in the sound content, and the like. If it is a video recorded in a specific concert hall or stadium, the recording location may be included in the title information. For example, if it has title information such as "AAA concert hall regular concert", the processor 120 may automatically identify that "AAA concert hall" corresponds to the recording location. Alternatively, various information associated with the location thereof may be included in metadata of the sound content. In this case, the processor 120 may automatically identify the location based on the information.

According to another example, the processor 120 may decode video data included in the sound content, analyze characteristics of the video frame, and estimate at which location the sound content has been generated. The processor 120 may analyze pixel values of each of the pixels in the video frame, and estimate a part at which pixel values of a similar range are consecutively continued as an edge of an object. The processor 120 may identify each of the objects (e.g., face of signer, size of stage, form, position, flat card, etc.) in the video frame based on a form of a closed curve that the edge, and analyze a characteristic portion with which the location may be specified. For example, if a sign indicating "AAA concert hall" is included in the video frame, the processor 120 may automatically identify the location based on the sign.

According to still another example, the processor 120 may directly receive input of the location through an interaction with the user.

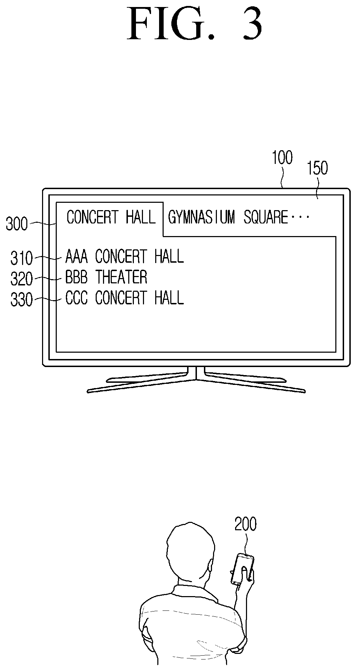

FIG. 3 indicates an example of a method for selecting a location through a user interaction. Referring to FIG. 3, the content processing apparatus 100 may further include a display 150.

The processor 120 may control the display 150 to display a selection screen for receiving selection of one among a plurality of locations. Referring to FIG. 3, the selection screen 300 may be included with location categories of various types such as concert halls, gymnasiums, squares, and the like, and information 310, 320, and 330 about the various locations registered in the location categories. The user may select one among the information described by using a remote controller or his or her user terminal apparatus. The selection signal of the user may be received at the content processing apparatus 100 through the communication part 110.

The processor 120 may identify a location corresponding to the sound content based on the received selection signal. In FIG. 3, if AAA concert hall 310 has been selected, the processor 120 may obtain reflection sound characteristic information corresponding to the identified location among the information stored in the memory 130.

The reflection sound characteristic information may be information indicating a characteristic of a reflection sound for a sound source generated from a specific location. Specifically, at least one among various information such as, for example, and without limitation a pre-delay time, a reverb time, size, decay pattern, mix information, and the like may be included in the reflection sound characteristic information. The pre-delay time may be time until a first reflection sound arrives after an original sound is emitted, the size may be information about a size of a location at which a relevant sound content is recorded, the reverb time may be time during which reverberations are maintained, the decay pattern may be a pattern in which sizes of the reverberations gradually decrease from the size of the original sound, and the mix information may be a ratio of the original sounds and the reverberations.

Meanwhile, although FIG. 3 shows that selecting by unique locations such as "AAA concert hall" and "BBB theater" is possible, the embodiment is not necessarily limited thereto, and may be implemented such that selection by location categories such as concert halls, gymnasiums, squares, and the like is possible. In this case, if "concert hall" is selected, the processor 120 may apply reflection sound characteristic information of a normal concert hall.

Meanwhile, the processor 120 may perform an operation for identifying at least one external apparatus to play back the sound content together. The identifying of the external apparatus may be implemented in various methods according to the embodiment.

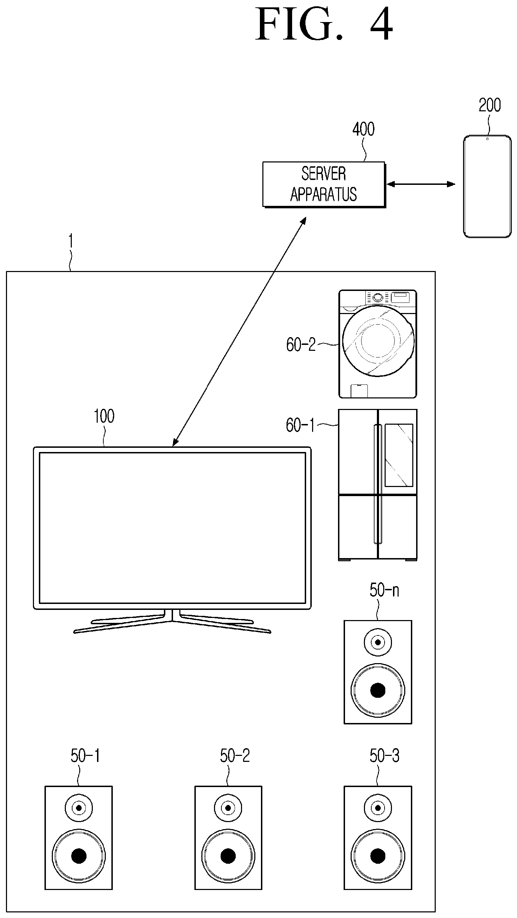

FIG. 4 is a diagram illustrating an example of a method for identifying external apparatus.

Referring to FIG. 4, the content processing apparatus 100 positioned in the same space 1 together with a plurality of external apparatuses 50-1 to 50-n, 60-1, and 60-2 may perform communication with a server apparatus 400.

The space 1 in FIG. 4 may be various indoor and outdoor spaces such as a home or office, a lobby of a building, a factory, or a park.

The server apparatus 400 may perform communication with a user terminal apparatus 200 in possession of the user. In FIG. 4, although the user terminal apparatus 200 has been shown implemented as a mobile phone, types of the user terminal apparatus may be variously changed.

The server apparatus 400 may provide a platform for integrated management and control of various apparatuses that include an Internet of Things function.

The user terminal apparatus 200 may be installed with an application for accessing the server apparatus 400. If the user executes a relevant application, the user may connect to the platform provided by the server apparatus 400. The user may input various information and register the information to his or her user account in the server apparatus 400. In the user account, information about various electronic apparatuses that the user uses or is in possession of may be registered.

The processor 120 may receive information about the external apparatuses 50-1 to 50-n, 60-1, and 60-2 positioned in the same space 1 from the server apparatus 400 through the communication part 110.

The received information may include types, product numbers, manufacturing dates, other specification information, and the like of each of the external apparatuses 50-1 to 50-n, 60-1, and 60-2. The processor 120 may automatically identify the external apparatuses 50-1 to 50-n that support a sound output function among the whole of the external apparatuses 50-1 to 50-n, 60-1, and 60-2 based on the received information. In an example, information about the various electronic apparatuses may be stored in the memory 130. In case of apparatuses manufactured in the same manufacturing company as the content processing apparatus 100, information as described may be stored in advance in the memory 130 during the manufacturing process of the content processing apparatus 100. However, the embodiment is not necessarily limited thereto, and various information may be frequently updated even after the content processing apparatus 100 is sold.

In still another example, the processor 120 may receive input of information about peripheral external apparatuses from the user terminal apparatus 200 rather than the server apparatus 400. For example, the processor 120 may search for peripheral apparatuses that are communicatively connectable via Bluetooth or Wi-Fi, and display the search result through the display 150. The user may select, using a remote controller or his or her user terminal apparatus 200, an apparatus to use together in the playing back of the sound content among the searched results.

The processor may obtain IP addresses, and the like of the peripheral external apparatuses 50-1 to 50-n and perform communication with the external apparatuses 50-1 to 50-n through the communication part 110.

Meanwhile, the processor 120 may identify positions of the external apparatuses 50-1 to 50-n in order to output one sound content together with the external apparatuses 50-1 to 50-n. When the positions of the external apparatuses 50-1 to 50-n are identified, the processor 120 may identify relative distances or directions from the content processing apparatus 100. In addition, if a viewing position of the user is identified, directions and distances of each of the external apparatuses 50-1 to 50-n may be identified based on the user.

The method for identifying the positions of the external apparatuses 50-1 to 50-n may be variously implemented.

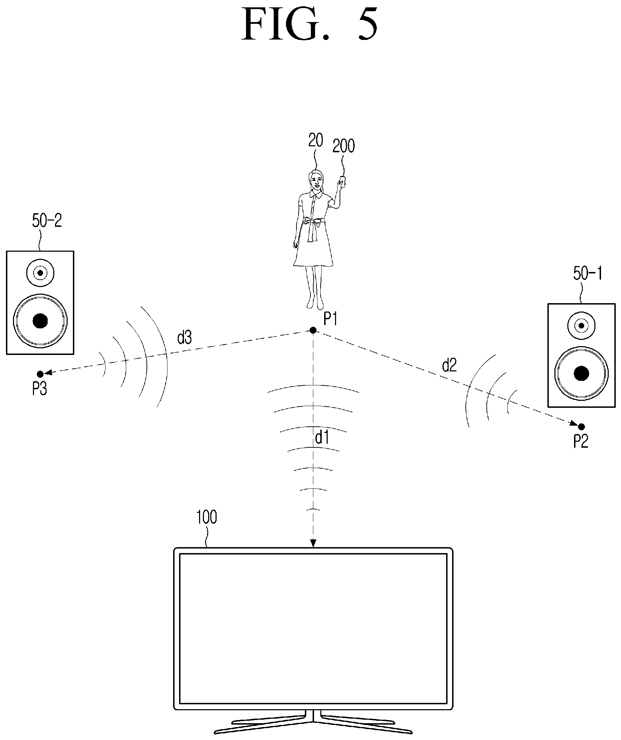

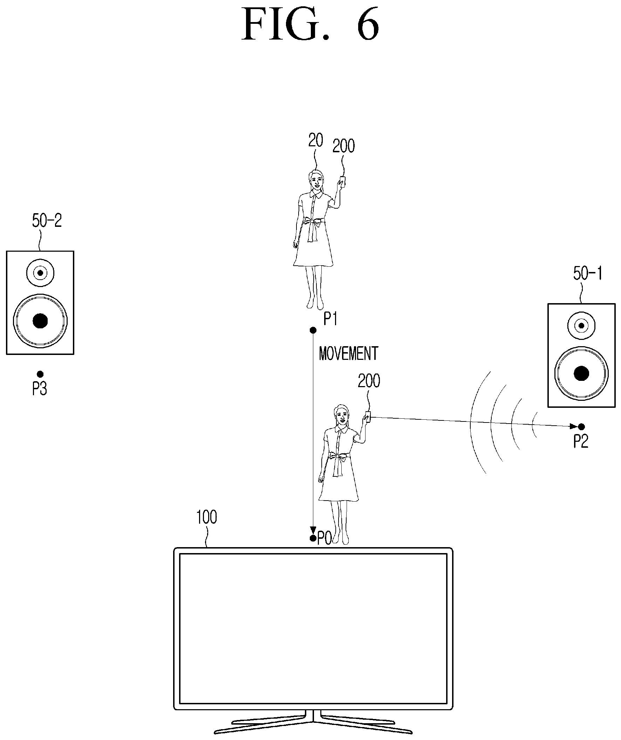

FIG. 5 and FIG. 6 are diagrams illustrating position identifying methods of an external apparatus according to various embodiments of the disclosure.

First, in the position identifying method of FIG. 5, it may be assumed that the user terminal apparatus 200 includes a microphone, and the user 20 is either carrying the user terminal apparatus 200, or have it placed nearby.

The processor 120 may control the display 150 to display a plurality of messages consecutively to guide an arrangement direction of the user terminal apparatus 200 to various directions. The processor 120 may control either the speaker 140 or the external apparatuses 50-1 to 50-n to consecutively output a test sound while displaying each message.

First, the processor 120 may control the display 150 to display a first message guiding to arrange the user terminal apparatus 200 toward the direction of the content processing apparatus 100 in order to identify the viewing position of the user 20. For example, if the user terminal apparatus 200 is a mobile phone, and the content processing apparatus 100 is a TV, a first message of "turn-on the microphone of the mobile phone, and point to the TV holding up the mobile phone in that state" may be displayed.

The processor 120 may control the speaker 140 to output a test sound after a pre-set time (e.g., 3 seconds) has passed after displaying the first message. The test sound may be a sound signal used in position identification. The test sound may be configured as a signal sound signal having a certain volume size and frequency, but is not necessarily limited thereto, and may be configured as a sound signal with mixed frequency signals of various sizes. The user terminal apparatus 200 may receive input of a test sound through its own microphone. The user terminal apparatus 200 may obtain reception characteristic information of the test sound. The reception characteristic information may be information about a volume size, reception time, and the like of the input test sound.

A processor of the user terminal apparatus 200 may identify time at which a a test sound signal is input through a microphone, and an amplitude of the test sound signal, and the like and recording the reception characteristic information.

Alternatively, if the content processing apparatus 100 and the user terminal apparatus 200 share information about an output timing of the test sound signal, the user terminal apparatus 200 may directly calculate a display time by comparing the output timing and a reception timing. In this case, information about the delay time may also be included in the reception characteristic information.

Meanwhile, the user terminal apparatus 200 such as a mobile phone typically includes an orientation detection sensor such as, for example, and without limitation, a geomagnetic sensor or a gyro sensor, an acceleration sensor, or the like. Sensing values of the orientation detection sensor may variously change according to changes in a pitch angle, a roll angle, a yaw angle, and the like of the user terminal apparatus 200. The processor provided in the user terminal apparatus 200 may identify, based on the sensing value, which direction does one end (e.g., front part) of the user terminal apparatus 200 is pointing to. Information indicating to which direction was the user terminal apparatus 200 arranged may be referred to as an arrangement direction information below.

The processor 120 may estimate, based on reception characteristic information and arrangement direction information identified in the user terminal apparatus 200 being received through the communication part 110, the viewing position of the user based on the characteristic of the test sound output through the speaker 140, and the received reception characteristic information and arrangement direction information. Specifically, the processor 120 may directly calculate the delay time by comparing the outputting timing and the reception timing of the test sound, but if the delay time is directly calculated from the user terminal apparatus 200 and transmitted, that delay time may be used. The processor 120 may use a speed of sound and the delay time and identify a distance d1 by which the user terminal apparatus 200 is spaced apart from the content processing apparatus 100. In addition, the processor 120 may estimate, based on the arrangement direction information indicating toward the south, the content processing apparatus 100 being arranged toward the north based on the viewing position, and the user being positioned at a position (i.e., P1) that is spaced apart by d1 toward the south.

The processor 120 may store each estimated information in the memory 130. After estimating the viewing position of the user through the method described, the processor 120 may consecutively estimate the positions of the external apparatuses 50-1 to 50-n also in the same method.

For example, in order to estimate the position of a first external apparatus 50-1 positioned at a left side of the user 20 in FIG. 5, the processor 120 may control the display 150 to output a second message guiding to arrange the user terminal apparatus 200 toward the first external apparatus 50-1. Specifically, a second message of "turn-on the microphone of the mobile phone, and point to the speaker to be used together" may be displayed. The processor 120 may transmit a control signal to the first external apparatus 50-1 to output a test sound after a certain time.

Accordingly, if the first external apparatus 50-1 outputs the test sound, the microphone of the user terminal apparatus 200 may receive the test sound, and obtain the reception characteristic information, the arrangement direction information at that time, and the like. The user terminal apparatus 200 may transmit the obtained information to the content processing apparatus 100.

For convenience of description, the test sound output after displaying the first message, the reception characteristic information, and the arrangement direction information at that time may respectively be referred to as a first test sound, first reception characteristic information, and first arrangement direction information, and the test sound after displaying the second message, the reception characteristic information, and the arrangement direction information may respectively be referred to as a second test sound, second reception characteristic information, and second arrangement direction information.

The processor 120 may estimate a position P2 of the first external apparatus 50-1 based on information about a second test sound and second reception characteristic information and second arrangement direction information received through the communication part 110.

Using the method as described, the processor 120 may be able to identify, by controlling the speaker to consecutively output a test sound while simultaneously displaying a plurality of messages consecutively and each of the external apparatuses, positions P2 and P3, a viewing position P1, and distances thereof d1, d2, and d3 of all apparatuses that are to participate in the output of one sound content.

FIG. 6 is a diagram illustrating still another position identifying method.

In FIG. 5, although the viewing position was first identified and then, the positions of other external apparatuses have been consecutively identified, according to the embodiment in FIG. 6, the viewing position is not identified separately, and the microphone of the user terminal apparatus 200 is utilized as a microphone of the content processing apparatus 100 to identify the positions of the external apparatuses.

Referring to FIG. 6, the processor 120 may control the display 150 to first display the first message that guides the user terminal apparatus including the microphone that is in a portable state to move to a pre-set position based on the content processing apparatus. The pre-set position may be directly in front of the content processing apparatus 100, but is not necessarily limited thereto, and may be determined as 1 m in front of the content processing apparatus 100. Specifically, the first message may contain content such as "stand directly in front of the TV with the microphone of the mobile phone turned-on".

If the user 20 moves from the position P1 to positon P0 based on the message described, the processor 120 may control the display 150 to display a second message that guides the user terminal apparatus 200 at that position to be arranged facing toward one of the at least one external apparatus. FIG. 6 indicates a state in which the first external apparatus 50-1 is pointed to.

The processor 120 may control the first external apparatus 50-1 to output a test sound in this state. The user terminal apparatus 200 may receive input of the test sound output from the first external apparatus 50-1 through the microphone, and obtain the reception characteristic information and arrangement direction information thereof. The processor 120 may receive the reception characteristic information and arrangement direction information from the user terminal apparatus 200, and estimate the position of the first external apparatus based on the information. Because the method for obtaining the information described and the method for estimating the positions have been described in detail in FIG. 5, redundant descriptions thereof will be omitted.

When the position P2 of the first external apparatus is estimated, the processor 120 may proceed with the same process for even a second external apparatus 50-2 which is follows thereafter. Through the method described, the processor 120 may be able to estimate the positions, distances, and the like of all external apparatuses to participate in the playing back of the sound content.

Meanwhile, if the content processing apparatus 100 includes the microphone, the distance with the external apparatus may be estimated using its own microphone without operating in connection with the user terminal apparatus 200 as in FIG. 6.

Alternatively, if the content processing apparatus 100 includes a camera, the processor 120 may estimate, after capture a surrounding space 1 using the camera, and after identifying the user 20 and the external apparatuses 50-1 to 50-n within the captured image, a number of pixels included in the identified object, positions or distances of the user 20 and the external apparatuses 50-1 to 50-n according to the positions, and the like.

According to another example, the processor 120 may receive map data generated from a robot cleaner or a mobile projector, other mobile robots, and the like that drive within the same space 1. The map data may be received through the server apparatus 400, or received directly from the robot cleaner or the like that generated the map data.

If it is a latest robot cleaner, not only a LIDAR sensor, but also various sensors such as a depth camera, an RGB camera, and the like may be included. Accordingly, semantic information indicating not just simply a size and form of a map, but also furniture, home appliances, room positions, and the like positioned in the map may also be generated together therewith. The semantic information described may be provided in a semantic tag form that is tagged to each object displayed within the map together with the map. The processor 120 may identify, based on receiving the map described through the communication part 110, positions and relative distances, directions, and the like of the content processing apparatus 100, the external apparatuses 50-1 to 50-n, and the user 20 based on the map and semantic information.

According to still another example, the processor 120 may provide various UI screens through the display 150, and identify the positions and relative distances, directions, and the like of each of the content processing apparatus 100, the external apparatuses 50-1 to 50-n, and the user 20 based on information about the viewing position, positions of the external apparatuses, and the like that is input through the UI screen. For example, the user 20 may view with the naked eye how many meters in front of the content processing apparatus 100 that he or she is positioned, which apparatus is spaced apart by how many meters in a direction by what angle toward the right side of the content processing apparatus 100 and the like, and directly input into the UI screen of the content processing apparatus 100.

As described above, the positions of each of the apparatuses may be identified through various methods.

The processor 120 may reconstruct the sound content to sound content added with reflection sounds based on the identified position of at least one external apparatus and reflection sound characteristic information.

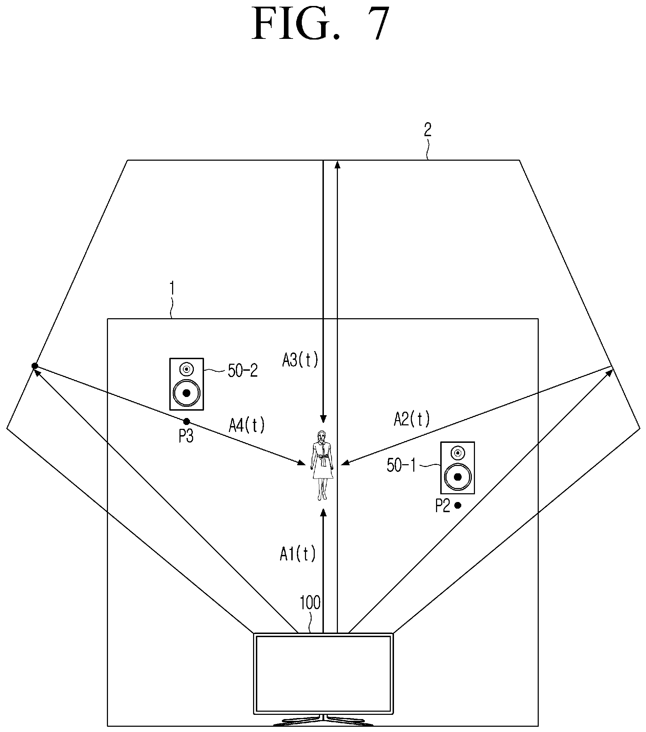

Specifically a method for reconstructing sound content will be described in detail below in FIG. 7.

FIG. 7 indicates a difference between an actual space 1 and a space 2 corresponding to a sound content (hereinafter, referred to as 'virtual space').

An actual space 1 such as a typical home is constructed in a square structure in most cases for convenience of use, and TVs or other sound devices are, in particular, often used open spaces such as the living room. Compared to the above, actual theaters are often implemented as closed spaces formed in a hexagonal form or other polygonal forms that allow for sounds to travel well to listeners like a virtual space 2.

The processor 120 may reconstruct the sound content such that, even if the content processing apparatus 100 is used in the actual space 1, a sense of dimensionality and a space of space can be felt as if listening in the virtual space 2.

First, the processor 120 may obtain, based on a location corresponding to the sound content being identified as described in the above-described embodiments, reflection sound characteristic information stored for that location from the memory 130.

In addition, the processor 120 may correct, based on a number or positions of the external apparatuses 50-1 to 50-n to participate in the output of the sound content being identified as described in the above-described other embodiments, the reflection sound characteristic information based on the identified information. Accordingly, the sound content may be reconstructed based on the corrected reflection sound characteristic information.

FIG. 7 indicates two external apparatuses 50-1 and 50-2 that are participating.

The processor 120 may estimate a size of the space based on the position of each of the external apparatuses 50-1 and 50-2 and the position of the content processing apparatus 100. The processor 120 may compare the estimated size of the space and size information included in the reflection sound characteristic information, and determine a reduction ratio and the like.

Specifically, the reflection sound may be divided into an early reflection component and an after cluster and late reverberation component. If it is a location of a hexahedral form such as the virtual space 1 in FIG. 7, the early reflection component may be sound that is reflected once on reflection surfaces such as a wall surface, a ceiling, and a floor surface and then reaching until the viewing position.

The processor 120 may adjust, based on adjusting the pre-delay time, the reverb time, the decay pattern, the mix information, and the like of the reflection sound characteristic information by applying the determined reduction ration, and the like, timing of the early reflection component, the cluster, and the late reverberation component being output, the size, and the like. In other words, in the case of the theater, because the wall surface from which the reflection sound is generated is positioned far away based on the position of the user, it may take a relatively long time from a time point when early reflection was carried out until a time point at which the sound is to be listened by the user, but because the external apparatuses 50-1 and 50-2 are close by, if reflection sounds are added at the same time point when the early reflection is carried out, the sound may be heard by the user relatively quickly. The processor 120 may adjust, taking into consideration the point described, the pre-delay time and the reverb time according to the distance between the viewing position and the external apparatus, and adjust the decay pattern and the like based therefrom.

The processor 120 may reconstruct the sound content by applying the adjusted reflection sound characteristic information to the sound content. In an example, the processor 120 may generate, after detecting audio data in the sound content, audio signals by removing the header information and flag therefrom and performing decoding. The processor 120 may reconstruct the generated audio signal by performing convolution of the adjusted decay pattern.

Meanwhile, a reflection sound component may be endlessly generated according to a structure of the virtual space 2, or a form of the reflection surface, or the like, but reflection may not be carried out on a wall surface of an actual space 1 due to wall paper, various structures, or the like. Accordingly, the processor 120 may adjust the mix information to raise the importance of reflection sounds in the direction from which audio signals are output from the external apparatuses 50-1 and 50-2 positioned in the surrounding to the user.

In FIG. 7, only reflection sound A2(t) reflected from the right wall, reflection sound A3(t) reflected from the back wall, and reflection sound A4(t) reflected from the left wall have been shown while the content processing apparatus 100 is outputting sound content A1(t) for convenience of description.

The processor 120 may modify the mix information to raise the ratio of A2(t) to A1(t) for the first external apparatus 50-1 positioned at the left side based on the viewing position. Conversely, the second external apparatus 50-2 may be positioned at the right back side based on the user. Accordingly, the processor 120 may modify the mix information to add A3(t) component and A4(t) component to A1(t) in a fixed ratio, respectively, for the second external apparatus 50-2.

The processor 120 may deliver, after reconstructing the sound content through the method described, at least a portion of the reconstructed sound content to each of the external apparatuses 50-1 and 50-2 through the communication part 110. For example, the processor 120 may transmit A1'(t) which raised the ratio of A2(t) to A1(t) for the first external apparatus 50-1 through the communication part 110. Alternatively, A1"(t) which raised the importance of A3(t) and A4(t) to A1(t) for the second external apparatus 50-2 may be transmitted through the communication part 110.

However, the above is merely one example, and in another example, the reconstructed sound content may be identically provided to each of the external apparatuses 50-1 and 50-2 identically. The processor 120 may control the speaker 140 to output by synchronizing the reconstructed sound content with each of the external apparatuses 50-1 and 50-2. Here, the outputting by synchronization may mean suitably matching the output timing, volume size, and the like of each apparatus such that the user is able to experience a natural harmony.

In other words, if the plurality of apparatuses output one sound content, the output times may not match one another due to the distance or position of each apparatus with the user, the direction thereof, or whether an obstacle is present in-between, or the volume size of each apparatus feeling different from one another to the user. Accordingly, a step for synchronizing the output characteristics between the plurality of apparatuses may be performed in addition thereto.

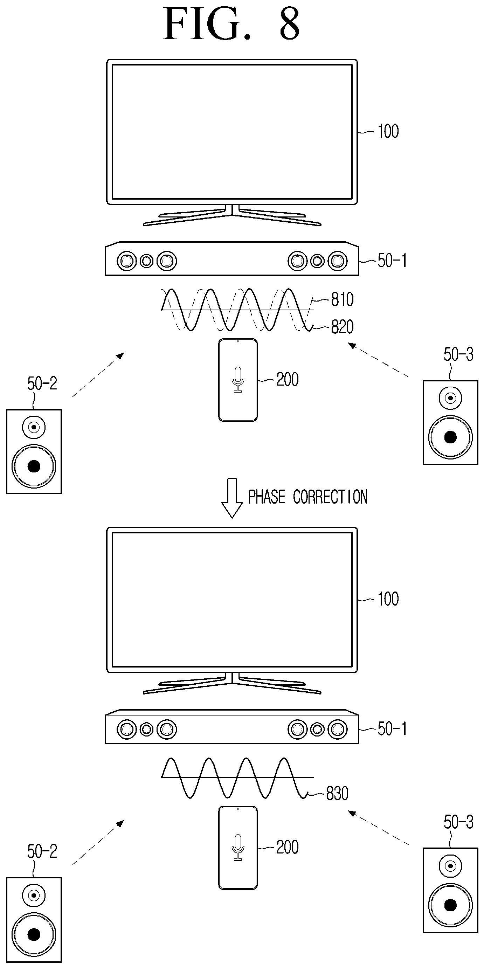

FIG. 8 indicates an example of a method for synchronizing an output time in a content processing apparatus according to at least one embodiment of the disclosure.

Referring to FIG. 8, the content processing apparatus 100 may be in a state operating in connection with a total of three external apparatuses 50-1, 50-2, and 50-3, and the first external apparatus 50-1 which is one among the above may be implemented as a sound bar arranged close to the lower side or the front side of the content processing apparatus 100. If the sound bar is used, the content processing apparatus 100 may limit the sound output through its own speaker 140, but is not necessarily limited thereto, and may output sound utilizing both the speaker 140 and the sound bar.

The processor 120 may control the speaker 140 and each of the external apparatuses 50-1 to 50-3 to consecutively output the test sound while the microphone of the user terminal apparatus 200 positioned at the viewing position is in an activated state.

The processor 120 may receive reception characteristic information for the test sound output from each of the apparatuses from the user terminal apparatus 200. The processor 120 may identify a phase difference for each test sound based on the reception characteristic information for each test sound. In FIG. 8, the test sound 810 output from the remaining external apparatuses 50-1 and 50-3 excluding the second external apparatus 50-2 and the speaker may match, and only a phase of the test sound 820 output from the second external apparatus 50-2 that is different is indicated. In this case, the processor 120 may perform synchronization 830 matching with the second external apparatus 50-2 by slowing the output timing of the speaker 140 and the first and third external apparatus 50-1 and 50-3, and correcting the output phase of the second external apparatus 50-2.

The volume and not just the phase may be synchronized using a similar method.

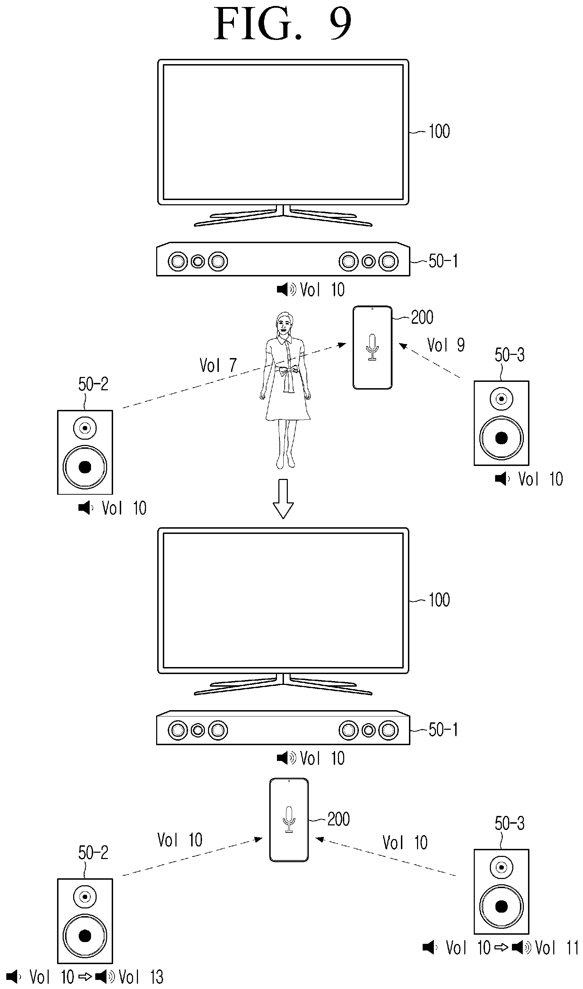

FIG. 9 is a diagram illustrating an example of a method for synchronizing volume in a content processing apparatus according to at least one embodiment of the disclosure. FIG. 9 indicates the content processing apparatus 100 and the first to third external apparatuses 50-1 to 50-3 being arranged in the same form as in FIG. 8.

The user 20 may standby at the viewing position while the microphone of the user terminal apparatus 200 is in an activated state. The processor 120 may control the speaker 140 and each of the external apparatuses 50-1 to 50-3 to consecutively output the test sound. FIG. 9 indicates all apparatuses outputting the test sound at volume level 10 (vol 10).

However, based on characteristics of sound, if a distance increases further or if there are obstacles such as a wall or a pillar, furniture, or the like present in between, the size may reduce. Accordingly, the size of the test sound received from the user terminal apparatus 200 may vary. In FIG. 9, the reception size of the test sound of the first external apparatus 50-1 is same at level 10, and the reception size of the test sounds of the second and third external apparatuses 50-2 and 50-3 may show a reduced state at level 7 and level 9, respectively. Accordingly, the processor may increase the volume size of the second and third external apparatuses 50-2 and 50-3 to level 13 and level 11, respectively, to match the volume size of the first external apparatus 50-1. As described, because the processor 120 performs synchronization by adjusting at least one volume of each of the external apparatuses and the speaker, the user may feel that the volume of all apparatuses are the same.

In FIG. 8 and FIG. 9, the matching of the phase and volume has been described while outputting the test sound by consecutively controlling each of the several apparatuses, but the embodiment is not limited thereto, and the phase and volume of the plurality of apparatuses may be adjusted simultaneously.

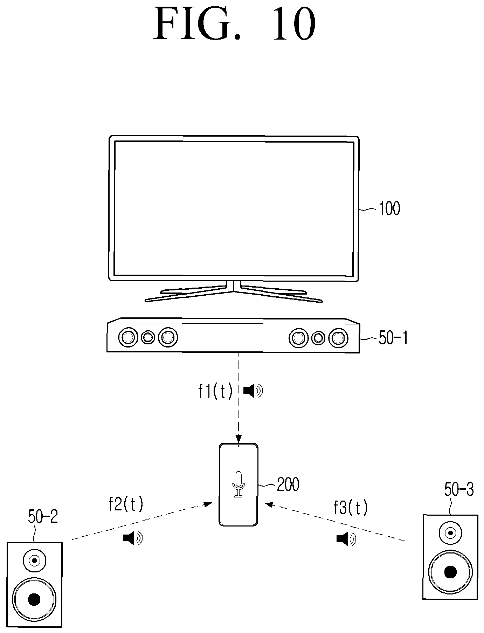

FIG. 10 is a diagram illustrating still another method for synchronizing output times and volumes of a content processing apparatus and an external apparatus.

Referring to FIG. 10, the processor 120 may control to simultaneously output test sounds having different frequencies for each of the speaker 140 and each of the external apparatuses 50-1 to 50-3. In FIG. 10, assuming that the content processing apparatus 100 does not use the speaker 140, and outputs sound through the sound bar which is the first external apparatus 50-1, each of the test sounds output from the first to third external apparatuses 50-1 to 50-3 may be represented as f1(t), f2(t), and f3(t).

In FIG. 10, assuming that f1(t) and f2(t) are received at the same t1 time point, and a f3(t) signal is received at a slightly later t2 time point, the processor 120 may perform synchronization by slowing the output timing of the first and second external apparatuses 50-1 and 50-2 by t2-t1 matching with a third external apparatus 50-3 that output f3(t). In addition, after the processor 120 identifies a signal having a volume size that is lower than a volume size set by the user based on the volume size among the received signal characteristics of each of f1(t), f2(t), and f3(t), an output volume size of the external apparatus that out output the signal may be increased more than a set volume.

In the above, the method for performing synchronization by automatically adjusting the output timing and the volume size by the content processing apparatus 100 has been described, but the embodiment is not necessarily limited thereto.

In other words, according to another example, the processor 120 may display, through the display 150 or the user terminal apparatus 200, a message guiding to move the position of the external apparatus to a suitable position where the output timing of the volume is synchronized. Accordingly, the user may manually adjust the position of the external apparatus, and match the output timing or the volume.

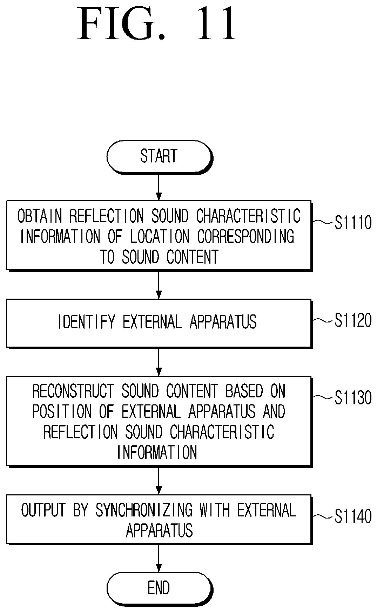

Meanwhile, various performances may be carried out continuously at the same location, but the location may be frequently changed for content such as movies or drama. In this case, the processor 120 of the content processing apparatus 100 may change the location by frequency analyzing the video frame within the content. The processor 120 may frequently reconstruct, after obtaining reflection sound characteristic information that matches with the changed location from the memory 130, audio data in the content based on the obtained reflection sound characteristic information and the position of the external apparatus. Accordingly, the user may experience a sense of audio playing as if being played back in various environments while viewing one content. FIG. 11 is a flowchart illustrating a sound content processing method of an electronic apparatus according to at least one embodiment of the disclosure. Referring to FIG. 11, the content processing apparatus may obtain reflection sound characteristic information of a location corresponding to sound content (S1110). The location corresponding to the sound content may be identified with various methods as described above in the description. In an example, as described in FIG. 3, the location may be identified according to selection by the user, or the location information may be extracted from various information associated with the sound content. Alternatively, the location may be specified by analyzing the video frame included in the sound content. The content processing apparatus may obtain the reflection sound characteristic information corresponding to a specific location among the pre-stored reflection sound characteristic information. In the various embodiments described above, the reflection sound characteristic information set differently by locations being stored in the memory 130 has been described, but the reflection sound characteristic information may be stored in an external server of other apparatus that is not the content processing apparatus. In this case, the content processing apparatus may transmit the identified location information to the relevant apparatus, and receive the reflection sound characteristic information from the apparatus. In addition, the content processing apparatus may identify at least one external apparatus to participate in the output of the sound content (S1120),

The sound content may be reconstructed based on a position of the identified external apparatus and the reflection sound characteristic information (S1130). Because the methods for selecting an external apparatus, identifying positions, and reconstructing sound content have been described in detail in the various embodiments described above, redundant descriptions thereof will be omitted.

The content processing apparatus may output the reconstructed sound content by synchronizing with the external apparatuses (S1140). The synchronization may be an operation for matching a phase (i.e., output timing) or volume. Because the specific synchronization method has been described in detail above, redundant descriptions thereof will be omitted.

The sound content processing method described in FIG. 11 may be performed by the content processing apparatus having the configuration of FIG. 2, but is not necessarily limited thereto, and may be performed by a sound device of a different configuration therefrom.

Meanwhile, as described above, the content processing apparatus 100 may identify the position of the external apparatus and the like by operating in connection with the user terminal apparatus 200.

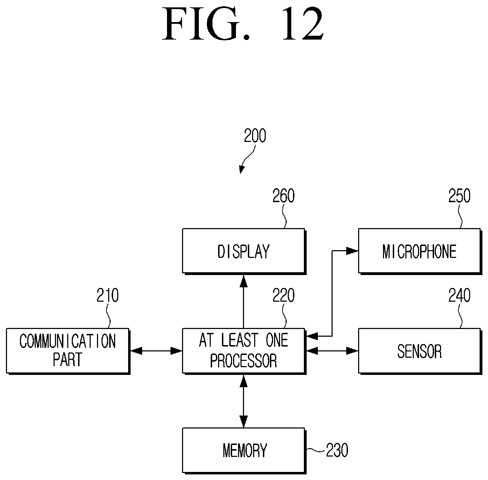

FIG. 12 is a block diagram illustrating an example of a configuration of a user terminal apparatus that operates in connection with a content processing apparatus according to various embodiments described above. Referring to FIG. 12, the user terminal apparatus 200 may include a communication part 210, a processor 220, memory 230, a sensor 240, a microphone 250, and a display 260.

Because the specific examples of the communication part 210, the processor 220, and the memory 230 have been described in FIG. 2, redundant descriptions thereof will be omitted.

The communication part 210 may be a configuration for performing communication with various external apparatuses including the content processing apparatus 100 and the server apparatus 400, and the memory 230 may be a configuration for storing various programs and data.

In an example, the memory 230 may be stored in an application for accessing the server apparatus.

The processor 220 may execute the application stored in the memory 230, and display the execution screen through the display 260. The processor 220 may access the server apparatus 400 through the communication part 210, and control the display 260 to display various information transmitted from the server apparatus 400 by including the information on the execution screen.

The sensor 240 may be configured as at least one sensor to detect an arrangement direction of the user terminal apparatus 100. Specifically, the sensor 240 may include a geomagnetic sensor, an azimuth sensor, an acceleration sensor, and the like.

The processor 220 may generate the above-described arrangement direction information based on sensing values of the sensor 240.

In addition, the processor 220 may activate the microphone 250, and receive input of various test sounds or other audio signals that are output from the content processing apparatus 100 or other external apparatuses. Here, activating may mean an operation that turns-on hardware for executing a function of the microphone 250, or executing software. The processor 220 may generate, based on a test sound being input through the microphone 250, reception characteristic information, arrangement direction information, and the like of the test sound. Because the method for generating the information described has been described in detail above, redundant descriptions thereof will be omitted.

The processor 220 may transmit, based on a signal requesting for provision of information being received from the content processing apparatus 100, or an event of having to transmit the above-described information occurring, the reception characteristic information and arrangement direction information directly to the content processing apparatus 100 through the communication part 210, or transmit indirectly through the server apparatus 400.

In addition to the above, the processor 220 may control, based on a display request for various messages generated in the content processing apparatus 100 being received, the display 260 to display a suitable message according to the request. For example, the processor 220 may display the various messages through the display 260 as described in FIG. 5 and a portion of FIG. 6.

Meanwhile, if the user terminal apparatus 200 also includes the speaker itself, the user terminal apparatus 200 may become involved in the playing back of the sound content together with the external apparatuses 50-1 to 50-n described above.

In the above, each of the various embodiments have been described, but each embodiment is not necessarily implemented individually, and may be combined with at least one other embodiment as a whole or partially and implemented together in one product.

According to the various embodiments of the disclosure as described above, even when the user is viewing a sound content (movie, drama, music, etc.) in the same space as a normal household, the user may experience a sense of immersion as if listening directly on scene. In addition, even users who do not have a multi-channel environment set up such as a home theater may be able to effectively utilize idle speakers within their homes.

Meanwhile, the various embodiments of the disclosure may be implemented with software including instructions stored in a machine-readable storage media (e.g., computer). The machine may call the stored instructions from the storage media, and as an apparatus operable according to the called instructions, may include not only the content processing apparatus 100 and the user terminal apparatus 200 according to the embodiments described, but also electronic apparatuses of various forms.

Specifically, a non-transitory computer-readable storage media stored with software for consecutively performing the step of obtaining reflection sound characteristic information for a location corresponding to the sound content to be played back among the pre-stored reflection sound characteristic information set different for each of the plurality of locations, the step of identifying at least one external apparatus to participate in the playing back of sound content among the external apparatuses positioned in the same space as the content processing apparatus, the step of reconstructing the sound content as sound content with added reflection sounds based on a position of at least one external apparatus and reflection sound characteristic information, and the step of outputting the reconstructed sound content by synchronizing with the searched at least one external apparatus by transmitting at least a portion of the reconstructed sound content to the identified at least one external apparatus may be provided.

The apparatus mounted with this non-transitory computer-readable media may perform various processing such as the identifying the location, identifying the external apparatus, reconstructing the sound content, and the like described in the above-described various embodiments.

The 'non-transitory' in the non-transitory computer-readable media merely means that the storage medium is tangible and does not include a signal, and the term does not differentiate data being semi-permanently stored or being temporarily stored in the storage media.

Alternatively, a program for performing the method according to the various embodiments described above may be distributed on-line through an application store. In the case of online distribution, at least a portion of a computer program product may be stored at least temporarily in the storage media such as a server of a manufacturer, a server of an application store, or a memory of a relay server, or temporarily generated.

Each of the elements (e.g., module or program) according to various embodiments may be configured as a single entity or a plurality of entities, and a portion of sub-elements of the above-mentioned relevant sub-elements may be omitted, or other sub-elements may be further included in the various embodiments. Alternatively or additionally, a portion of the elements (e.g., modules or programs) may be integrated into one entity to perform the same or similar functions performed by the respective elements prior to integration. Operations performed by a module, a program, or another element, in accordance with various embodiments, may be executed sequentially, in a parallel, repetitively, or in a heuristic manner, or at least a portion of the operations may be executed in a different order, omitted or a different operation may be added.

While the disclosure has been illustrated and described with reference to the attached drawings above, it will be understood that the scope of protection is determined by the claim scope which will be described below and the various embodiments and/or drawings are intended to be illustrative, not limiting. It will be understood by those skilled in the art that various changes in form and details may be made therein without departing from the true spirit and full scope of the disclosure, including the appended claims and their equivalents.

## Claims

1. A content processing apparatus, comprising:
a communication part;
a speaker;
memory storing reflection sound characteristic information different for each of a plurality of locations; and
at least one processor,
wherein the at least one processor is configured to:
obtain reflection sound characteristic information for a location corresponding to sound content from the memory,
search for at least one external apparatus to participate in playing back the sound content among external apparatuses positioned in a same space as the content processing apparatus,
based on a position of the at least one searched external apparatus and the reflection sound characteristic information, reconstruct the sound content to sound content with added reflection sounds,
transmit at least a portion of the reconstructed sound content to the search at least one external apparatus through the communication part, and
control the speaker to output the reconstructed sound content by synchronizing with the searched at least one external apparatus.

2. The content processing apparatus of claim 1,
wherein the at least one processor is configured to
identify a location corresponding to the sound content based on at least one of title information of the sound content, metadata comprised in the sound content, a video frame of the sound content, and obtain reflection sound characteristic information corresponding to the identified location among information stored in the memory.

3. The content processing apparatus of claim 1, further comprising:
a display,
wherein the at least one processor is configured to
control the display to display a selection screen for receiving selection of one among the plurality of locations,
based on a selection signal input from a remote controller or a user terminal apparatus corresponding to the content processing apparatus being input through the communication part, identify a location corresponding to the sound content based on the selection signal, and
obtain reflection sound characteristic information corresponding to the identified location among information stored in the memory.

4. The content processing apparatus of claim 1,
wherein the at least one processor is configured to
receive information about an external apparatus positioned in the same space as the content processing apparatus from a server apparatus in which an account of a user of the content processing apparatus is registered through the communication part, and
identify the at least one external apparatus that supports a sound output function based on received information.

5. The content processing apparatus of claim 1, further comprising:
a display,
wherein the at least one processor is configured to
control the display to consecutively display a plurality of messages that guides an arrangement direction of a user terminal apparatus including a microphone,
control each of the speaker and the at least one external apparatus to consecutively output a test sound,
receive reception characteristic information for each of the test sounds and arrangement direction information of the user terminal apparatus from the user terminal apparatus, and
based on the reception characteristic information and characteristics of each of the test sounds, and the arrangement direction information, estimate a viewing position of the user and a position of the at least one external apparatus.

6. The content processing apparatus of claim 1, further comprising:
a display,
wherein the at least one processor is configured to
control the display to consecutively display a first message that guides a user terminal apparatus comprising a microphone that is in a portable state to move to a pre-set position based on the content processing apparatus and a second message that guides the user terminal apparatus to be arranged toward one external apparatus among the at least one external apparatus at the pre-set position,
control the one external apparatus to output a test sound,
receive reception characteristic information corresponding to the test sound and arrangement direction information arranged toward the one external apparatus from the user terminal apparatus through the communication part, and
based on the reception characteristic information and characteristics of each of the test sounds, and the arrangement direction information, estimate a position of the external apparatus.

7. The content processing apparatus of claim 1,
wherein the reflection sound characteristic information comprises
information about characteristics of a plurality of reflection sounds generated at a location corresponding to the sound content,
wherein the at least one processor is configured to
based on a position at which the reflection sound is generated and a position of the at least one external apparatus, correct the reflection sound characteristic information, and reconstruct the sound content based on the corrected reflection sound characteristic information.

8. The content processing apparatus of claim 1,
wherein the at least one processor is configured to,
based on identifying at least on external apparatus to participate in playing back the sound content,
output a test sound through the speaker and the at least one external apparatus while a microphone of a user terminal apparatus positioned at a viewing position is activated,
receive reception characteristic information for each test sound output from the speaker and the at least one external apparatus from the user terminal apparatus, and
based on the reception characteristic information, synchronize by adjusting at least one of an output timing and volume of the reconstructed sound content to be output from the speaker and the at least one external apparatus.

9. A sound content processing method of a content processing apparatus, the method comprising:
obtaining reflection sound characteristic information for a location corresponding to sound content to be played back among pre-stored reflection sound characteristic information set differently for each of a plurality of locations;
identifying at least one external apparatus to participate in playing back the sound content among external apparatuses positioned in the same space as the content processing apparatus;
based on a position of the at least one external apparatus an the reflection sound characteristic information, reconstructing the sound content to sound content with added reflection sounds,
transmitting at least a portion of the reconstructed sound content to the identified at least one external apparatus, and outputting the reconstructed sound content by synchronizing with the searched at least one external apparatus.

10. The method of claim 9, further comprising:
identifying a location corresponding to the sound content based on at least one of title information of the sound content, metadata comprised in the sound content, and a video frame of the sound content.

11. The method of claim 9, further comprising:
displaying a selection screen for receiving selection of one among the plurality of locations; and
based on receiving a selection signal input from a remote controller or a user terminal apparatus corresponding to the content processing apparatus, identifying a location corresponding to the sound content based on the selection signal.

12. The method of claim 9,
wherein the identifying at least one external apparatus comprises:
receiving information about an external apparatus positioned in the same space as the content processing apparatus from a server apparatus in which an account of a user of the content processing apparatus is registered; and
identifying the at least one external apparatus supporting a sound output function based on received information.

13. The method of claim 9, further comprising:
displaying a first message that guides a user terminal apparatus comprising a microphone to be arranged toward a direction of the content processing apparatus;
outputting a first test sound;
receiving first reception characteristic information for the first test sound and first arrangement direction information of the user terminal apparatus from the user terminal apparatus;
based on the first reception characteristic information and characteristic of the first test sound, and the first arrangement direction information, estimating a viewing position of the user;
displaying a second message that guides the user terminal apparatus to be arranged toward a direction of one external apparatus among the at least one external apparatus;
controlling the one external apparatus to output a second test sound;
receiving second reception characteristic information for the second test sound and second arrangement direction information of the user terminal apparatus from the user terminal apparatus; and
based on the second reception characteristic information and characteristic of the second test sound, and the second arrangement direction information, estimating a position of the one external apparatus.

14. The method of claim 9,
wherein the reflection sound characteristic information comprises information about characteristics of a plurality of reflection sounds generated at a location corresponding to the sound content,
wherein the reconstructing the sound content to sound content with added reflection sounds comprises:
based on a position at which the reflection sound is generated and a position of the at least one external apparatus, correcting the reflection sound characteristic information; and
reconstructing the sound content based on the corrected reflection sound characteristic information.

15. The method of claim 9, further comprising:
based on identifying at least one external apparatus to participate in playing back the sound content, outputting a test sound through the speaker and the at least one external apparatus while a microphone of a user terminal apparatus positioned at a viewing position is in an activated state;
receiving, from the user terminal apparatus, reception characteristic information for each test sound output from the speaker and the at least one external apparatus;
based on the reception characteristic information, adjusting at least one of output timing and volume of each of the speaker and the at least one external apparatus.
